# EUROPÄISCHE PATENTSCHRIFT

(11) **EP 3 732 069 B1**
(45) Veröffentlichungstag und Bekanntmachung des Hinweises auf die Patenterteilung: **05.01.2022**
(21) Anmeldenummer: 18836452.5
(22) Anmeldetag: 05.12.2018
(51) Int. Cl.: B60H 1/00, B60H 1/32, F17C 9/04, F28D 7/16, F28D 15/00, F28F 1/00, F28F 9/02, F28F 23/02

(54) **WÄRMEÜBERTRAGUNGSEINRICHTUNG FÜR DIE KÄLTEBEREITSTELLUNG IN KÜHLFAHRZEUGEN, DEREN KRAFTFAHRZEUGMOTOR MIT LNG ANGETRIEBEN WIRD**
HEAT EXCHANGING SYSTEM FOR PROVIDING COLD IN A REFRIGERATION VEHICLE, WHICH IS DRIVEN BY AN LNG POWERED ENGINE
SYSTÈME D'ÉCHANGE THERMIQUE DE PRODUCTION DE FROID DANS UN VEHICULE PROPULSÉ À L'AIDE DE GNL

(30) Priorität: 29.12.2017 DE 102017012125
(43) Veröffentlichungstag der Anmeldung: 04.11.2020
(73) Patentinhaber: REGASCOLD GmbH, 04316 Leipzig (DE)
(72) Erfinder: BRAUN, Rainer, 45721 Haltern am See (DE); OTTO, Peter, 04779 Wermsdorf (DE); BIHL, Lothar, 88348 Bad Saulgau (DE)
(74) Vertreter: Kraft, Werner
(86) Internationale Anmeldenummer: PCT/DE2018/000360
(87) Internationale Veröffentlichungsnummer: WO 2019/129320

(56) Entgegenhaltungen:
- DE-A1-102016 006 121
- GB-A- 748 264
- US-A1- 2013 055 728
- US-B1- 6 367 265

## Beschreibung

### Anwendungsgebiet

Die Erfindung betrifft die Kältebereitstellung für Kühlfahrzeuge, die tiefkaltes verflüssigtes Erdgas LNG (liquified natural gas) als Antriebsenergie nutzen.

### Stand der Technik

Tiefkaltes verflüssigtes Erdgas, das für den Antrieb von Kraftfahrzeugmotoren eingesetzt wird, verdampft man zum Zwecke der Regasifizierung üblicherweise mit Hilfe von Umgebungsluft und/oder Motorabwärme. Die dabei frei werdende energetisch wertvolle Kälteleistung bleibt vielfach ungenutzt, was aber nicht zwangsläufig so sein muss. Vielmehr sollte diese zurückgewonnen und dem Kühlfahrzeug als Transportkälte zur Verfügung gestellt werden.

Der Stand der Technik hält dazu folgende, in Patentschriften dokumentierte technische Lösungen bereit.

In den Druckschriften DE 195 31 122 und EP 0 788 908 wird eine Kühleinrichtung beschrieben, die den Transportraum eines Kühlfahrzeuges kühlt, dessen Kraftfahrzeugmotor mit regasifizierten LNG betrieben wird. Das in einem kälteisolierten Tank mitgeführte, tiefkalte LNG wird über ein hermetisch geschlossenes System in den Transportraum gepumpt und dort in einem Wärmeübertrager durch Wärmeaufnahme aus der umgewälzten Transportraumluft verdampft. Parallel zu diesem Wärmeübertrager ist zusätzlich ein Latentkältespeicher geschaltet, der aus dem Speichermaterial ebenfalls Wärme an das zu verdampfende, hermetisch abgeschlossene LNG abgibt. Das verdampfte LNG strömt schließlich als gasförmiger Brennstoff zum Motor.

Ist der LNG- Fluss bei Motorstillstand unterbrochen, so kann die Kühlung des Transportraumes mit Hilfe des Kältespeichers aufrecht erhalten werden, indem die umgewälzte Raumluft die Speichermasse erwärmt. Dargestellt wird in der Druckschrift ein Sattelzug mit einer Sattelzugmaschine, die den LNG-Tank enthält, und mit einem Sattelauflieger, der den Transportraum mit dem Luftkühler und dem Kältespeicher enthält. Die flüssiges LNG zuführende Leitung und die verdampftes LNG abführende Leitung, und damit auch die Sattelzugmaschine und der Sattelauflieger, können mit Hilfe von Kupplungen unter herrschendem Betriebsdruck leckagefrei getrennt werden. Bei dem dann unterbrochenen LNG- Fluss kann der Kältespeicher die Kühlung fortsetzen. Die vorgeschlagene Kühltechnik hat den Vorteil der sehr einfachen Gestaltung. Dem steht jedoch ein wesentlicher Nachteil gegenüber, nämlich dass das gesamte aus der Pumpe, den Leitungen, den Kupplungen und den Wärmeübertragern bestehende System der Gefahr ausgesetzt ist, dass die mit der tiefen, bis -161 °C reichenden Temperatur des LNG einhergehende verringerte Materialbelastbarkeit eine Undichtigkeit verursacht, die dazu führt, dass brennbares Erdgas in den Transportraum und in die Umgebung des Transportfahrzeuges gelangt.

In der DE 10 2010 020 476 ist ebenfalls ein mit tiefkaltem LNG angetriebenes Kühlfahrzeuge beschrieben, bei dem parallel zum LNG- Tank unter Inkaufnahme eines beachtliche Kostenaufwandes ein zusätzlicher Tank, der tiefkalten verflüssigten Stickstoff enthält, mitgeführt ist. Dessen Regasifizierung macht in einem dafür vorgesehenen Wärmeübertrager wertvolle Kälteleistung für das im Transportraum gelagerte Kühlgut verfügbar, und zwar sowohl während des Fahrbetriebes als auch während des Stillstandes bei abgeschaltetem Motor, wobei der entstehende gasförmige Stickstoff gefahrlos an die Umgebung abgeführt wird. Die parallele oder alternative Nutzung der durch die Regasifizierung des tiefkalten LNG freigesetzten Kälteleistung erfolgt beim Betrieb des Motors unter dem vorbeschriebenen gewichtigen Gefahrenpotential des brennbaren Erdgases.

Schließlich wird für Kühlfahrzeuge, die mit tiefkaltem LNG betrieben werden, in den Druckschriften WO 2011/141287 und US 2013/0055728, welche den Oberbegriff des Anspruchs 1 zeigt, eine technische Lösung vorgeschlagen, die zur Rückgewinnung der Kälteleistung mit einem flüssigen, nichtbrennbaren Zwischenmedium arbeitet und so die vom Erdgas ausgehende Gefahr im Bereich des Transportraumes ausschließt. Dargestellt ist ein Sattelzug mit Zugmaschine und Auflieger, in dem sich wie üblich der zu kühlende Transportraum befindet. In diesem wird die zum Zwecke der Kühlung aus umgewälzter Luft abzuführende Wärme in einem Wärmeübertrager an das Zwischenmedium übertragen. Dieses wird mit Hilfe einer Pumpe in einem geschlossenen Wärmeübertragungskreislauf geführt, der aber mit Hilfe von Kupplungen und teilweise flexiblen Leitungen trennbar ist. Das Zwischenmedium transportiert dabei die aufgenommene Wärme zu einem zweiten, auf der Zugmaschine nahe dem LNG- Speicher und dem Verbrennungsmotor platzierten Wärmübertrager, um sie hier an das mit einer Pumpe zugeführte LNG zu übertragen. Was das Gefährdungspotential der durch die tiefe Temperatur bedingten Materialbelastung einerseits und des brennbaren Erdgases andererseits betrifft, so kann die kompakte, sich mit kurzen Leitungswegen begnügende Anordnung der von LNG beaufschlagten Komponenten auf der Zugmaschine als vorteilhaft angeführt werden. Einen wesentlichen Nachteil weist jedoch das vorgeschlagene Verfahren der Übertragung der Wärme an das LNG auf. Es erfolgt rekuperativ über eine das Zwischenmedium und das LNG trennende Wand. Deren Oberflächentemperatur auf der vom Zwischenmedium beaufschlagten Seite unterscheidet sich wegen des sehr geringen Transportwiderstandes der Wärmeleitung durch die dünne Wand einerseits und des Wärmeübergangs an das verdampfenden LNG andererseits nur sehr geringfügig von der Temperatur des LNG. Das Zwischenmedium muss deshalb so beschaffen sein, das es bis hinab zur Temperatur des LNG, also bis -161 °C, nicht gefriert und fließbar ist. Ein derartiges flüssiges Zwischenmedium, von dem zusätzlich noch zu fordern ist, dass es im Falle einer Leckage für die Umwelt, insbesondere für das im Transportraum gelagerte Kühlgut, unschädlich ist, steht nur äußerst begrenzt und dann auch nur sehr kostenaufwendig zur Verfügung.

Zudem erfordert dessen Förderung zum Wärmeübertrager des Transportraumes wegen der tiefen Temperatur und der durch sie bewirkten hohen Viskosität des Zwischenmediums eine hohe Pumpleistung. Die vorgeschlagene Technik ist somit ebenfalls nicht zufriedenstellend.

### Aufgabenstellung

Aus dem vorbeschriebenen Stand der Technik, insbesondere aus dessen Nachteilen, leitet sich die erfinderische Aufgabenstellung ab.

Diese besteht im Wesentlichen in der Entwicklung einer Wärmeübertragungseinrichtung zur Bereitstellung von Transportkälte für Kühlfahrzeuge, die mit tiefkaltem verflüssigtem Erdgas angetrieben werden. Dabei soll dem Kühlraum und dem darin befindlichen Kühlgut durch Luftumwälzung Wärme entzogen und nachfolgend an das zu verdampfende LNG übertragen werden, was allerdings voraussetzt, dass das sehr tiefe Temperaturniveau des LNG, das bis -161 °C betragen kann, sicher beherrscht wird. Insbesondere ist die Gefahr abzuwenden, dass in einem Schadensfall Erdgas NG (natural gas) in den Kühlraum des Kühlfahrzeuges und/oder in einen geschlossenen Raum, in dem das Kühlfahrzeug eventuell abgestellt ist, eintritt. Befindet sich der Kühlraum im Sattelauflieger eines Sattelzuges, so ist zusätzlich zu berücksichtigen, dass sich die Sattelzugmaschine, in der sich der LNG- Tank befindet, vom Sattelauflieger einfach trennen lässt.

Zur Lösung dieser Aufgabenstellungen sind geeignete technische Mittel anzugeben.

### Lösung der Aufgabenstellung

Die Lösung der Aufgabenstellung ist im Patentanspruch 1 angegeben.

Die untergeordneten Ansprüche enthalten zweckmäßige Ausgestaltungen.

Die Erfindung macht sich den Umstand zunutze, dass die Kühlluft im Transportraum des Kühlfahrzeuges nur bis tiefstens -30 °C abzukühlen ist, dass also für den Wärmetransport zum LNG eine sehr hohe treibende Temperaturdifferenz zur Verfügung steht, die es zulässt, die Wärmeübertragung über ein flüssiges Zwischenmedium zu führen, um sich so gegen das dem tiefen Temperaturniveau des LNG anzulastende Gefährdungspotential, das heißt gegen die Verringerung der Materialbelastbarkeit und gegen die mögliche Leckage brennbaren Gases, abzusichern.

Zu diesem Zweck wird der thermische Widerstand Rₜₕ = ΔT / Q, das heißt, der Quotient aus der treibenden, am Widerstand Rₜₕ abfallenden Temperaturdifferenz ΔT und der zu übertragenden Wärmeleistung Q des rekuperativen Wärmeübertragers, in welchem die Verdampfung des LNG erfolgt, gezielt so erhöht, dass die Temperatur der Wand, die den wärmeabgebenden vom wärmeaufnehmenden Stoffstrom trennt, auf der dem LNG abgewandten Oberfläche so hoch ist, dass das sie benetzende Zwischenmedium nicht gefriert und sicher fließfähig ist. Wird die zulässige Abkühlung des Zwischenmediums nicht zu tief gefordert, zum Beispiel nur bis -85 °C, so sind geeignete Wärmeträger sehr gut verfügbar.

Das flüssige Zwischenmedium, von einer Umwälzpumpe im geschlossenen Wärmeträgerkreislauf gefördert, ermöglicht trotz strikter räumlicher Trennung die Wirkverbindung zwischen dem Luftkühler im Transportraum und dem LNG- Verdampfer und damit die kompakt zusammenfassende, einfach abzusichernde Anordnung der durch tiefkaltes LNG beaufschlagten Komponenten LNG- Speicher, LNG- Pumpe und LNG- Wärmeübertrager, zum Beispiel auf der Zugmaschine eines Sattelzuges, und bietet gleichzeitig einen kurzen Leitungsweg für das durch Regasifizierung produzierte brennbare Erdgas zum Verbrennungsmotor. Im Übrigen gestattet die Umweltfreundlichkeit des Zwischenmediums, dass der in gedämmten teilweise flexiblen Leitungen geführte Kreislauf mit Hilfe beidseitig absperrender Schnellverschlusskupplungen geöffnet werden kann, um beispielsweise den Auflieger eines Sattelzuges von der Zugmaschine zu trennen.

Erfindungsgemäß erfolgt die Wärmeübertragung an das LNG in einem aus kaltzähem Werkstoff gefertigten Rohrbündelwärmeübertrager, der das zu verdampfende LNG in den Rohren und das wärmeabgebende Zwischenmedium im Mantelraum führt und der so gestaltet ist, dass die in Folge der im Betrieb auftretenden großen zeitlichen und örtlichen Temperaturänderungen keine unbeherrschbaren mechanischen Spannungen verursachen. Für die Erfindung vorgeschlagen ist ein Rohrbündelwärmeübertrager mit Schwimmkopf und zwei Mantelwegen.

Die Erfindung schlägt vor, in den Rohrbündelwärmeübertrager einen zusätzlichen, den üblich vorhandenen Widerstand gezielt erweiternden thermischen Widerstand einzufügen. Dieser wird erfindungsgemäß durch Anordnung koaxial verlaufender Schutzrohre erreicht, welche die LNG führenden Wärmeübertragungsrohre so umhüllen, dass ein hermetisch geschlossener mit einem trockenen Gas, beispielsweise Stickstoff oder Luft, zu füllender Zwischenraum entsteht, dessen geringe Schichtdicke zwischen den Rohren so auszulegen ist, dass sich auf der dem Zwischenmedium zugewandten Oberfläche des Schutzrohres die gewünschte ausreichend hohe Temperatur einstellt.

Als weitere sicherheitstechnische Maßnahme wird vorgeschlagen, den Druck des hermetisch zwischen den koaxialen Rohren und in den Freiräumen zwischen den Rohrplatten eingeschlossenen trockenen Gases deutlich niedriger zu wählen als den minimalen LNG- Druck, so dass der bei einer Undichtigkeit infolge eindringenden Erdgases auftretende Druckanstieg den dafür vorgesehenen Sicherheitsdruckschalter und über diesen die Sperrung der LNG- Zufuhr auslöst. Der Nachteil, dass wegen des vergrößerten thermischen Widerstandes im Rohrbündelwärmeübertrager für die Sicherstellung der erforderlichen Wärmedurchgangsleistung die Wärmeübertragungsfläche erhöht werden muss, wird durch die nun gegebene Möglichkeit kompensiert, ein gleichermaßen wirksames wie kostengünstiges flüssiges Zwischenmedium zu wählen. Diesbezüglich ist Therminol D12 eine vorteilhafte Lösung. Es handelt sich um eine synthetische Wärmeträgerflüssigkeit auf der Basis aliphatischer Kohlenwasserstoffe, die als Wärmeträgerflüssigkeit bis hinab zu -85 °C nicht gefriert und pumpfähig ist, die bei einer Leckage im Störfall für die Umwelt unschädlich ist und die für gelegentliche unbeabsichtigte Kontakte mit Lebensmitteln zugelassen ist.

Das flüssige Zwischenmedium überträgt im Transportraum des Kühlfahrzeuges die Kälteleistung, das heißt, es nimmt aus der zu kühlenden Luft die zum LNG zu transportierende Wärme auf. Hierfür ist ein innen mit dem flüssigen Zwischenmedium und außen mit der von einem Ventilator geförderten Kühlraumluft beaufschlagter Rippenrohrwärmeübertrager eingesetzt.

Der Wärmeübergang außen ist durch hohe Rippen und durch die hohe Strömungsgeschwindigkeit der Luft und der Wärmeübergang innen ist durch die hohe Strömungsgeschwindigkeit des Zwischenmediums so günstig realisierbar, dass der thermische Widerstand des Wärmedurchgangs minimiert ist und die dadurch maximierte Temperatur des Zwischenmediums in eine reduzierte Viskosität und damit in eine entsprechend geringe Antriebsleistung der den Zwangsumlauf sicherstellenden Umwälzpumpe resultiert.

### Ausführungsbeispiel

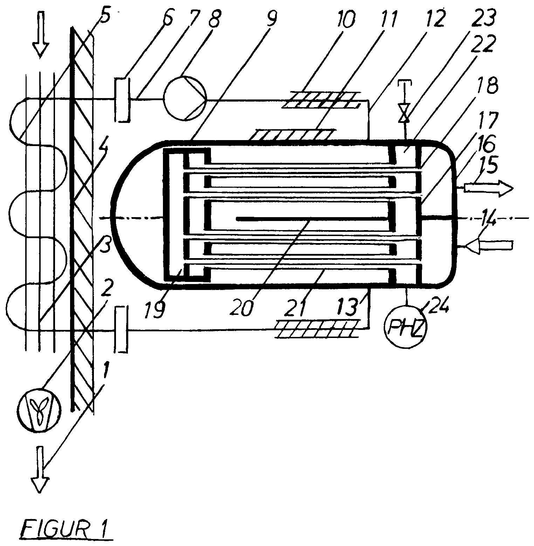

Im nachstehenden Ausführungsbeispiel wird die Erfindung an Hand einer schematischen Darstellung in Figur 1 der erfindungsgemäß gestalteten Wärmeübertragungseinrichtung für die Kältebereitstellung in Kühlfahrzeugen, deren Kraftfahrzeugmotor mit LNG angetrieben wird, näher erläutert.

Alle durch das vom LNG geprägten mit tiefem Temperaturniveau belasteten Bauteile bestehen aus kaltzähem Material. Alle auf tiefen Temperaturen befindlichen Bauteile sind durch eine Dämmung vor unerwünschtem Wärmeeinfall geschützt.

Das im Kühlfahrzeug in einem Speicher mitgeführte tiefkalte LNG wird in dem dafür vorgesehenen Rohrbündel- Wärmeübertrager (9) regasifiziert, um als gasförmiges Erdgas (15) den Kraftfahrzeugmotor anzutreiben. Die hier für die Verdampfung des LNG benötigte Wärme wird durch den wärmeabgebenden Stoffstrom eines flüssigen Zwischenmediums (5) übertragen, das in einem hermetisch geschlossenen Wärmeübertragungskreislauf unter Nutzung flexibler Schlauchleitungen (7) und einer Umwälzpumpe (8) bei Ein- und Austritt (12, 13) des Zwischenmediums (5) in bzw. aus dem Mantelraum im Zwangsumlauf geführt ist und seinerseits die Wärme mit einem Rippenrohr- Wärmeübertrager (3) aus der im Transportraum des Kühlfahrzeuges mit einem Ventilator (2) umgewälzten Kühlluft (1) als Kälteleistung bezieht.

Der LNG- Verdampfer ist als Rohrbündelwärmeübertrager (9) mit Schwimmkopf und zwei Mantelwegen ausgeführt, so dass die in Folge der im Betrieb auftretenden großen zeitlichen und örtlichen Temperaturänderungen keine unbeherrschbaren mechanischen Spannungen verursachen.

Das am LNG- Eintritt (14) zugeführte tiefkalte LNG tritt über die Wärmeübertragerhaube (16) ein und wird über einen Rohrboden (17) auf die LNG führenden Wärmeübertragungsrohre (18) verteilt, fließt zur Umlenkhaube (19) im Schwimmkopf des Rohrbündelwärmeübertragers (9), wird umgelenkt und fließt, wiederum in Wärmeübertragungsrohren (18) geführt, zum Rohrboden (17) zurück, um von dort in den oberen Teil der durch eine Trennwand geteilten Wärmeübertragerhaube (16) zu gelangen und schließlich über den Austrittsstutzen (15) teilweise oder vollständig regasifiziert, direkt oder über einen zusätzlichen mit Motorabwärme betriebenen Wärmeübertrager, den Verbrennungsmotor des Kühlfahrzeuges zu erreichen.

Alle LNG führenden Wärmeübertragungsrohre (18) des Rohrbündelwärmeübertragers (9) sind von koaxial verlaufenden Schutzrohren (21) umgeben, die von dafür vorgesehenen zusätzlichen Rohrböden getragen werden, so dass der Zwischenraum zwischen den LNG führenden Wärmeübertragungsrohren (18) und den Schutzrohren (21), wie auch die Räume zwischen den Rohrböden an den Enden, mit einem trockenen Gas (22) als Schutzgas gefüllt, als thermischer Widerstand wirken, der sich dem üblichen Transportwiderstand des Wärmedurchgangs durch eine einfache Rohrwand überlagert. Aus dem damit gezielt vergrößerten, dem Wärmetransport vom Zwischenmedium (5) zum LNG entgegen stehenden thermischen Widerstand resultiert eine deutlich erhöhte treibende Temperaturdifferenz, was zur Folge hat, dass die Oberflächentemperatur der vom Zwischenmedium (5) benetzten Schutzrohre (21) deutlich höher ist als diejenige des bis -161 °C kalten LNG. Unter dieser Voraussetzung, das heißt bei entsprechender Wahl der in der Regel sehr dünnen Schichtdicke des trockenen Schutzgases (22), beispielsweise Stickstoff oder Luft, stehen Zwischenmedien (5) zur Verfügung, die weder gefrieren, noch wegen zu hoher Viskosität unpumpbar werden.

Der Nachteil, dass wegen des vergrößerten thermischen Widerstandes im LNG- Verdampfer für die Sicherstellung des erforderlichen Wärmedurchganges die Wärmeübertragungsfläche erhöht werden muss, wird durch die nun gegebene Möglichkeit kompensiert, ein gleichermaßen wirksames wie kostengünstiges flüssiges Zwischenmedium (5) zu wählen. Diesbezüglich ist Therminol D12 eine vorteilhafte Lösung. Es handelt sich um eine synthetische Wärmeträgerflüssigkeit auf der Basis aliphatischer Kohlenwasserstoffe, die als Wärmeträgerflüssigkeit bis hinab zu -85 °C pumpfähig ist, die bei einer Leckage im Störfall für die Umwelt unschädlich ist und die für gelegentliche unbeabsichtigte Kontakte mit Lebensmitteln zugelassen ist. Das Zwischenmedium (5) tritt über den Stutzen am Eintritt (12) in den durch ein Trennblech (20) geteilten Mantelraum des Rohrbündelwärmeübertragers (9) ein und strömt über die sich ergebenden zwei Mantelwege im Gegenstrom zum LNG zum Stutzen am Austritt (13).

Als weitere sicherheitstechnische Maßnahme wird vorgeschlagen, den Druck des hermetisch zwischen den koaxialen Rohren und in den Freiräumen zwischen den Rohrplatten eingeschlossenen trockenen Gases (22) deutlich niedriger zu wählen als den minimalen LNG- Druck, so dass der bei einer Undichtigkeit infolge eindringenden Erdgases auftretende Druckanstieg den dafür vorgesehenen Sicherheitsdruckschalter (24) und über diesen die Sperrung der LNG- Zufuhr auslöst.

Das flüssige Zwischenmedium (5) überträgt im Transportraum des Kühlfahrzeuges die Kälteleistung, das heißt, es nimmt aus der Kühlraumluft (1) die zum LNG zu transportierende Wärme auf. Hierfür wird ein innen mit dem flüssigen Zwischenmedium (5) und außen mit der von einem Ventilator (2) geförderten Kühlraumluft (1) beaufschlagter Rippenrohrwärmeübertrager (3) eingesetzt.

Der Wärmeübergang außen ist durch hohe Rippen und durch die hohe Strömungsgeschwindigkeit der Kühlraumluft (1) und der Wärmeübergang innen ist durch die hohe Strömungsgeschwindigkeit des Zwischenmediums (5) so günstig realisierbar, dass der thermische Widerstand des Wärmedurchgangs minimiert ist und die dadurch maximierte Temperatur des Zwischenmediums (5) in eine reduzierte Viskosität und damit in eine entsprechend geringe Antriebsleistung der den Zwangsumlauf sicherstellenden Umwälzpumpe (8) resultiert.

Im Übrigen gestattet die Umweltfreundlichkeit des Zwischenmediums (5), dass der in gedämmten, teilweise flexiblen Schlauchleitungen (7) geführte Kreislauf mit Hilfe beidseitig absperrender Schnellverschlusskupplungen (6) geöffnet werden kann, um beispielsweise den Auflieger eines Sattelzuges von der Zugmaschine zu trennen.

### Bezugszeichenliste

- LNG: Verflüssigtes Erdgas (liquified natural gas)
- NG: Regasifiziertes Erdgas
- Rₜₕ: Thermischer Widerstand
- Q: Wärmeleistung
- ΔT: Temperaturdifferenz
- PHZ: Druck, oberer Grenzwert, Schutz durch Auslösung bzw. sicherheitsrelevante Schaltfunktion
- 1: Kühlraumluft
- 2: Ventilator
- 3: Rippenrohrwärmeübertrager
- 4: Gedämmte Kühlraumwand
- 5: Wärmeübertragendes Zwischenmedium
- 6: Beidseitig absperrende Schnellverschlusskupplung
- 7: Flexible Leitung
- 8: Umwälzpumpe
- 9: Rohrbündelwärmeübertrager (mit Schwimmkopf und zwei Mantelwege)
- 10: Dämmung
- 11: Dämmung
- 12: Eintritt des Zwischenmediums in den Mantelraum
- 13: Austritt des Zwischenmediums aus dem Mantelraum
- 14: LNG- Eintritt
- 15: Austrittsstutzen für verdampftes LNG
- 16: Wärmeübertragerhaube mit Trennwand und LNG- Stutzen
- 17: Rohrboden
- 18: LNG führendes Wärmeübertragungsrohr
- 19: Umlenkhaube (im Schwimmkopf des Rohrbündelwärmeübertragers)
- 20: Trennblech (im Mantelraum des Rohrbündelwärmeübertragers)
- 21: Schutzrohr (koaxial zum LNG führenden Rohr)
- 22: Trockenes Gas (als hermetisch eingeschlossenes Schutzgas)
- 23: Serviceventil
- 24: Sicherheitsdruckschalter (Schließt bei steigendem Druck die LNG- Zufuhr.)

## Patentansprüche

1. Wärmeübertragungseinrichtung für die Kältebereitstellung in Kühlfahrzeugen durch Verdampfung von verflüssigtem Erdgas (LNG), wobei das regasifizierte Erdgas (NG) einerseits zum Antrieb des Motors des Kühlfahrzeugs vorgesehen ist und die verfügbare Kälteleistung andererseits zur Kühlung des mit dem Kühlfahrzeug zu transportierenden Kühlgutes nutzbar ist, indem ein im Kühlraum angeordneter erster, als Rippenrohrwärmeübertrager ausgeführter Wärmeübertrager (3) mit einem außerhalb des Kühlraumes befindlichen zweiten Wärmeübertrager (9) als LNG- Verdampfer unter strikter räumlicher Trennung in Wirkverbindung steht, wodurch dem Kühlraum Wärme entziehbar und mittels ventilatorgeförderter Kühlraumluft (1) und dem ersten Wärmeübertrager (3) Wärme abführbar ist, und zwar unter Nutzung eines im geschlossenen Kreislauf in Zwangsumlauf zwischen dem ersten Wärmeübertrager (3) und dem zweiten Wärmeübertrager (9) geführten flüssigen Zwischenmediums (5), das als synthetische Wärmeträgerflüssigkeit auf Basis aliphatischer Kohlenwasserstoffe bis hinab zu - 85 °C nicht gefriert und pumpfähig ist, bei einer Leckage im Störfall für die Umwelt unschädlich ist und für gelegentliche unbeabsichtigte Kontakte mit Lebensmitteln zugelassen ist, **dadurch gekennzeichnet, dass** für die Verdampfung des über den LNG- Eintritt (14) zuströmenden LNG´s ein aus kaltzähem Werkstoff gefertigter zweiter Wärmeübertrager (9) eingesetzt ist, der das zu verdampfende LNG in den Wärmeübertragungsrohren (18) und das wärmeübertragende Zwischenmedium (5) im Mantelraum vom Eintritt (12) zum Austritt (13) führt und als Rohrbündelwärmeübertrager (9) mit Schwimmkopf und zwei Mantelwegen ausgeführt ist, wodurch die in Folge der im Betrieb auftretenden großen zeitlichen und örtlichen Temperaturänderungen ausschließlich beherrschbare mechanische Spannungen verursachen und wobei koaxial angeordnete Schutzrohre (21) die LNG führenden Wärmeübertragungsrohre (18) so umhüllen, dass ein hermetisch abgeschlossener, mit einem trockenen Gas (22) füllbarer Zwischenraum gebildet ist, dessen geringe Schichtdicke zwischen den Rohren (18 und 21) so ausgelegt ist, dass hier der thermische Widerstand (Rₜₕ) zu einem Temperaturabfall führt, der ein Gefrieren des Zwischenmediums (5) an der Oberfläche des Schutzrohres (21) ausschließt.

2. Wärmeübertragungseinrichtung nach Anspruch 1, **dadurch gekennzeichnet, dass** der Druck des hermetisch eingeschlossenen trockenen Gases (22) deutlich niedriger gewählt ist als der minimale LNG- Druck, wodurch sichergestellt ist, dass der bei einer Undichtigkeit infolge eindringenden Erdgases auftretende Druckanstieg den dafür vorgesehenen Sicherheitsdruckschalter (24) und über diesen die Sperrung der LNG- Zufuhr auslöst.

3. Wärmeübertragungseinrichtung nach Anspruch 1, **dadurch gekennzeichnet, dass** das Zwischenmedium (5) von einer Umwälzpumpe (8) gefördert wird und die Wärme aus der von einem Ventilator (2) geförderten Kühlraumluft (1) an die Rippen des innen mit Zwischenmedium (5) beaufschlagten Rippenrohrwärmeübertragers (3) übertragbar ist, an dem der Wärmeübergang außen durch hohe Rippen und durch eine hohe Strömungsgeschwindigkeit der Kühlraumluft (1) und der Wärmeübergang innen durch eine hohe Strömungsgeschwindigkeit des Zwischenmediums (5) so günstig realisierbar ist, dass der thermische Widerstand (Rₜₕ = ΔT / Q), das heißt, der Quotient aus der treibenden, am Widerstand abfallenden Temperaturdifferenz (ΔT) und der Wärmeleistung (Q) des Wärmedurchgangs minimiert ist und die dadurch maximierte Temperatur des Zwischenmediums (5) in eine reduzierte Viskosität und damit in eine entsprechend geringe Antriebsleistung der Umwälzpumpe (8) resultiert.

4. Wärmeübertragungseinrichtung nach Anspruch 1, **dadurch gekennzeichnet, dass** das die Wärme aus dem Rippenrohrwärmeübertrager (3) zum Rohrbündelwärmeübertrager (9) transportierende Zwischenmedium (5) in mit Dämmungen (10) versehenen und zumindest teilweise flexiblen Leitungen (7) geführt ist, die mit Hilfe beidseitig absperrender Schnellverschlusskupplungen (6) trennbar sind.

## Claims

1. Heat transfer device for the provision of refrigeration in refrigerated vehicles through the evaporation of liquefied natural gas (LNG), while the regasified natural gas (NG, on the one hand, is intended for powering the engine of the refrigerated vehicle, and the available refrigerating capacity, on the other hand, is usable for cooling the refrigerated goods to be transported by the refrigerated vehicle, by a heat exchanger (3) arranged inside the cold room is operatively interacting, while preserving strict physical separation, with a heat exchanger (9) located outside the cold room as an LNG evaporator, such that heat is removable from the cold room and extractable by means of fan-delivered cold room air (1) and by means of the heat exchanger (3), i. e. by using a liquid intermediate medium (5) that is conducted by forced circulation in a closed loop between heat exchanger (3) and heat exchanger (9), that, being a synthetic heat transfer fluid based on aliphatic hydrocarbons, does not freeze and is pumpable down to -85°C, is harmless to the environment in case of leakage in the event of any incident, and is approved of for occasional and unintended contact with foodstuffs,
**characterized in that** a heat exchanger (9) made of tough-at-subzero material is used for evaporating the LNG flowing in via the LNG inlet, and conducts the LNG to be evaporated in the heat transfer tubes (18) and the heat-transferring intermediate medium (5) in the shell space from the inlet (12) to the outlet (13), and is designed as a shell-and-tube heat exchanger (9) with floating head and two shell paths, whereby the high temporal and local changes in temperature arising during operation exclusively cause controllable mechanical stresses, and while coaxially arranged protective tubes (21) enclose the LNG-conducting heat transfer tubes (18) thus forming an intermediate space which is hermetically closed, fillable with a dry gas (22), and has a low layer thickness between the tubes (18 and 21) which is designed so as to cause the thermal resistance (Rₜₕ) here to bring about a drop in temperature which excludes any freezing of the intermediate medium (5) at the surface of the protective tube (21).

2. Heat transfer device as claimed in claim 1,
**characterized in that** the pressure selected for the hermetically enclosed dry gas (22) is considerably lower than the minimum LNG pressure, which makes certain that the pressure increase occurring due to natural gas entering in case of leakage will activate the safety pressure switch (24) provided therefore and cause, via the latter switch, the LNG supply to be blocked.

3. Heat transfer device as claimed in claim 1,
**characterized in that** the heat from the cold room air (1) delivered by a fan (2) is transferable to the fins of a finned pipe heat exchanger (3) against the inside of which the intermediate medium (5) is applied, and at which the outside heat transfer by high fins on the outside and by a high flow velocity of the cold room air (1), and the inside heat transfer by a high flow velocity of the intermediate medium (5) are implementable in such a favourable way that the thermal resistance (Rₜₕ = ΔT / Q), i. e. the quotient of the driving temperature difference (ΔT) dropping at the resistor and the heat capacity (Q) of the heat transfer is minimised and the temperature thus maximised of the intermediate medium (5) results in a reduced viscosity and thus in a correspondingly lower drive power of the circulating pump (8).

4. Heat transfer device as claimed in claim 1,
**characterized in that** the intermediate medium (5) carrying the heat from the finned pipe heat exchanger (3) to the shell-and-tub e heat exchanger (9) is conducted in lines (7) which are flexible at least in part, provided with insulations (10) and disconnectable by using quick-release couplings (6) shutting off both ends.

## Revendications

1. Dispositif de transfert de chaleur destiné à l'alimentation en froid dans des véhicules frigorifiques par évaporation de gaz naturel liquéfié (LNG), le gaz naturel regazéifié (NG), d'un côté, étant prévu pour l'entraînement du moteur du véhicule frigorifique et la puissance frigorifique disponible, de l'autre côté, étant utilisable pour la réfrigération des marchandises réfrigérées à être transportées par le véhicule frigorifique, grâce à un échangeur de chaleur (3) disposé à l'intérieur de l'enceinte frigorifique étant en liaison active en assurant une séparation physique stricte avec un échangeur de chaleur (9) disposé à l'extérieur de l'enceinte frigorifique comme évaporateur de LNG, moyennant quoi de la chaleur est extractible de l'enceinte frigorifique et évacuable au moyen de l'air de l'enceinte frigorifique (1) refoulé par ventilateur et de l'échangeur de chaleur (3) et ce en utilisant un fluide intermédiaire liquide (5) conduit par circulation forcée en circuit fermé entre l'échangeur de chaleur (3) et l'échangeur de chaleur (9), fluide qui, étant un liquide caloporteur synthétique à base d'hydrocarbures aliphatiques, ne congèle pas et reste pompable à une température descendant jusqu'à - 85 °C, est inoffensif pour l'environnement en cas de fuite à cause d'un incident et est homologué pour les contacts occasionnels et non intentionnels avec des denrées alimentaires,
**caractérisé en ce que** l'échangeur de chaleur (9) utilisé pour l'évaporation du LNG arrivant par l'entrée de LNG (14) est fabriqué en un matériau destiné à être employé à basses températures, échangeur qui conduit le LNG à être évaporé dans les tubes de transfert de chaleur (18) et le fluide intermédiaire caloporteur (5) dans l'espace d'enveloppe à partir de l'entrée (12) jusqu'à la sortie (13) et qui est conçu comme échangeur de chaleur à faisceau tubulaire (9) avec tête flottante et avec deux chemins d'enveloppe, moyennant quoi les grandes variations temporelles et locales de la température survenant en cours de fonctionnement n'occasionnent qu'exclusivement des tensions mécaniques qui sont maîtrisables, des tubes de protection (21) disposés coaxialement enveloppant les tubes de transfert de chaleur (18) conduisant du LNG de manière à créer un espace hermétiquement fermé pouvant être rempli d'un gaz sec (22) dont la faible épaisseur de la couche entre les tubes (18 et 21) est conçue de manière à ce que la résistance thermique (Rₜₕ), à cet endroit, cause une baisse de température qui exclut la congélation du fluide intermédiaire (5) à la surface du tube de protection (21).

2. Dispositif de transfert de chaleur selon la revendication 1,
**caractérisé en ce que** la pression choisie du gaz sec (22) hermétiquement confiné est considérablement plus réduite que la pression minimale du LNG ce qui permet d'assurer que la montée en pression occasionnée par le gaz naturel qui pénètre en cas de fuite actionne le pressostat de sécurité (24) prévu à cet effet et, par l'intermédiaire de ce dernier, déclenche le blocage de l'alimentation en LNG.

3. Dispositif de transfert de chaleur selon la revendication 1,
**caractérisé en ce que** la chaleur provenant de l'air de l'enceinte frigorifique (1) refoulé au moyen d'un ventilateur (2) est transférable aux ailettes d'un échangeur de chaleur à tubes à ailettes (3) soumis à du fluide intermédiaire (5) à l'intérieur, échangeur auquel le transfert de chaleur à l'extérieur, grâce à des ailettes élevées et à une haute vitesse d'écoulement de l'air de l'enceinte frigorifique (1), et le transfert dé chaleur à l'intérieur, grâce à une haute vitesse d'écoulement du fluide intermédiaire (5), sont réalisables de manière tellement favorable que la résistance thermique (Rₜₕ = ΔT / Q), c'est-à-dire le quotient de l'écart de température (ΔT) déterminant et descendant à la résistance et de la puissance thermique (Q) de la transmission de chaleur, est minimisée et que la température maximisée de ce fait du fluide intermédiaire (5) résulte en une viscosité réduite et donc à une puissance d'entraînement diminuée de manière correspondante de la pompe de circulation (8).

4. Dispositif de transfert de chaleur selon la revendication 1,
**caractérisé en ce que** le fluide intermédiaire (5) transportant la chaleur de l'échangeur de chaleur à tubes à ailettes (3) à l'échangeur de chaleur à faisceau tubulaire (9) est conduit dans des lignes (7) qui sont pourvues d'isolements, flexibles au moins en partie et déconnectables grâce à des raccords rapides (6) bloquant les deux extrémités.
